Europäisches Patentamt

European Patent Office

Office européen des brevets

(19)

(11) Publication number: **0 232 073**
**A2**

(12) # EUROPEAN PATENT APPLICATION

(21) Application number: **87300529.2**

(22) Date of filing: **22.01.87**

(51) Int. Cl.⁴: **B 66 F 9/20**

(30) Priority: **25.01.86 GB 8601841**

(43) Date of publication of application:
**12.08.87 Bulletin 87/33**

(84) Designated Contracting States: **DE GB IT SE**

(71) Applicant: **YALE MATERIALS HANDLING LIMITED**
**Waddensbrook Lane**
**Wednesfield West Midlands WV11 3SW (GB)**

(72) Inventor: **Jones, John**
**45, Sherringham Drive**
**Essington Wolverhampton (GB)**

**Uccellini, Rinaldo Guisseppi**
**45, Springfield Road**
**Wolverhampton (GB)**

(74) Representative: **Campbell, Iain Angus et al**
**Swindell & Pearson 44 Friar Gate**
**Derby DE1 1DA (GB)**

(54) Improvements in or relating to materials handling vehicles.

(57) The operating handle (20) of a control valve for the hoist of an electrically powered fork lift truck passes between the limbs of at least one opto-interrupter (34) which signals to a circuit controlling the contactors of a motor supplying fluid to the hoist hydraulic ram when the handle has reached a predetermined position relating to a demand for fluid such that the contactors start the motor. A second interrupter (38) can signal when additional voltage is to be applied across the motor at greater hoisting speeds and the first interrupter may cause the contactor to be connected alternately with each half of the battery of the truck.

FIG.1

EP 0 232 073 A2

**Description**

Improvements in or Relating to Materials Handling Vehicles

The present invention concerns improvements in or relating to materials handling vehicles, especially but not exclusively electrically propelled fork lift trucks.

In designing an electrically powered fork lift truck a main object is the saving of energy, for example the saving of power supplied to electrically powered pumps supplying pressurised fluid to the hoist operating, slewing and auxiliary rams of the truck.

It is already known to utilise only half the battery voltage when slow operation of the hoist functions is called for and it is known also by the use of microswitches to energize the pumps only when hoist movement is called for, the microswitches normally being actuated on movement of the hoist hydraulic valve control levers. It is also known to utilise only half the battery voltage to power the pumps supplying fluid to the slewing and auxiliary rams, where fitted.

It is further required that split voltage system should alternate the power taken from both halves of the battery to eliminate uneven discharge.

The use of mechanically operated microswitches is disadvantageous as the switches are susceptible to damage through rough or incorrect use, by dirt or other debris or oil or grease, and be electrical break-down.

It is an object of the present invention to obviate or mitigate these and other drawbacks.

An embodiment of the present invention will now be described, by way of example only, with reference to the accompanying drawings, in which:-

Fig. 1 is a partial sectional side view of a fork lift truck hoist valve control console; and

Fig. 2 is a plan of the console with certain components which do not constitute part of the present invention removed.

A valve housing 10 has four hydraulic valve means 12, 14, 16, 18 therein controlling, for example the hydraulic fluid supplied to the hoist rams, tilting rams, slewing rams and auxiliary rams (where fitted) of a fork lift truck. As the rams do not form part of the present invention and are of known configuration and operation they have not been illustrated and will be not further described.

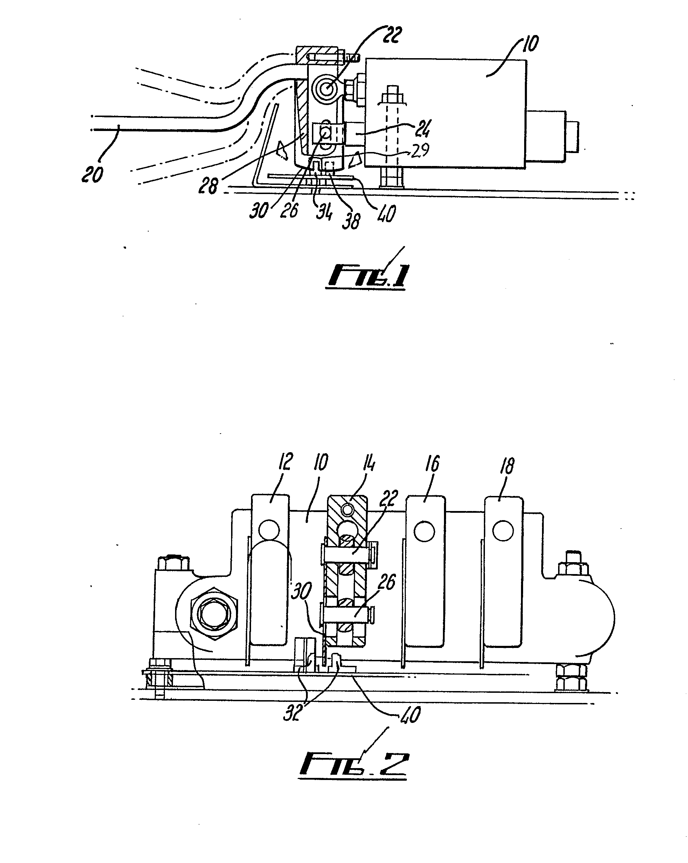

Each valve 12 - 18 has an operating handle 20, only one of which is shown (in three positions) in Fig. 1. The handle is pivotted about a pin 22 fixed to the housing 10 and is pivotally connected to the valve rod 24 by a further pin 26. A plate 28 is also connected to the arm, having an arcuate lower edge 30. The plate passes between the limbs 32 of an opto-interrupter 34 having a sender in one limb and a receiver in the other. The plate 28 has a slot 29 removed from its lower edge 30 at its centre. It will be observed that on movement of handle 20 not only will the valve rod 24 be moved to actuate the valve but also the plate 28 will move bringing the slot 29 out of the gap between the limbs of the interrupter 34 thus screening the receiver from the transmitter and sending a signal to a logic circuit which, in turn, causes the contactor controlling the electric motor driving the pump supplying fluid to the associated ram to be actuated. It will be realised, therefore, that power will be supplied to the pump only when it is required.

The circuit includes also an arrangement which connects the motor or motors with only one half of the battery and to ensure that the halves of the battery discharge at approximately the same rate the arrangement connects the motors alternatively to each half.

The hoist ram is called upon to have two operating speeds, the first of which is achieved as described above. The second speed is obtained by connecting both halves of the battery to the hoist ram motor to supply it with full battery voltage. In addition the valve 12 occupies a full speed position.

An additional opto-interrupter 38 (Fig. 1) is attached to the base circuit board 40 to signal to the circuit controlling the hoist ram pump motor when full battery voltage is to be supplied. It is spaced from the main interrupter 34 along the path of travel of plate 28 which, in this instance has an enlarged slot extending over half of its width. Thus, in operation when slow hoisting is required the hoist handle is moved from its rest position and the plate occupies the gap in the main interrupter giving a first signal. For higher speed hoisting the lever is moved further to bring the plate 28 into the gap of the second interrupter 38 to give a second signal. On lowering the hoist no interrupter action is required and the enlarged slot is in registry with both interrupter gaps.

Conveniently the base board 40 is a printed circuit board which, in addition to the opto-interrupters 34, 38 carries also a printed circuit providing electrical connections for the interrupters. It may also carry some or all of the components of the logic circuit referred to above.

Various other modifications can be made without departing from the scope of the invention, for example, the opto-interrupters may be substituted by other non-mechanical sensors, for example Hall effect switches and magnets.

**Claims**

1. A control arrangement for the hoist operating system of a mechanical handling vehicle, characterised in that it includes at least one non-mechanical sensor (34) located in the path of a hydraulic control lever (20) for the hoist hydraulic circuitry, the signals from said sensor (34) being utilized to energise contactors controlling an electrically driven pump for supplying hydraulic fluid to the hoist operating system.

2. An arrangement as claimed in claim 1, characterised in that the non-mechanical sensor (34) is an opto-interrupter.

3. An arrangement as claimed in claim 2, characterised in that a further opto-interrupter (38) is located in the path of the control lever (20) spaced from the said opto-interrupter (34) along the path of travel of the lever.

4. An arrangement as claimed in claim 2 or claim 3, characterised in that the opto-interrupters are mounted directly on a printed circuit board (40) together with interconnected printed circuits.

5. An arrangement as claimed in claim 3 or claim 4, characterised in that said first opto-interrupter (34) energises contactors connecting the hydraulic hoist pump to one half of the battery, said second opto-interrupter (38) energising contactors connecting the hoist pump to both halves of the battery.

6. An arrangement as claimed in any of claims 2 to 5, characterised in that said opto-interrupter signals a circuit which energies contactors connecting electric motors alternately to each half of the battery of the vehicle.

FIG.1

FIG.2